# EUROPEAN PATENT SPECIFICATION

(11) **EP 0 350 981 B1**
(45) Date of publication and mention of the grant of the patent: **15.12.1993**
(21) Application number: 89201632.0
(22) Date of filing: 21.06.1989
(51) Int. Cl.: A23G 3/00, A23G 1/00, A23D 9/00

(54) **Hard-fat substitute suitable for confectionery manufacture**
Hartfettersatz, geeignet zur Herstellung von Süsswaren
Succédané de graisses dures pour la préparation de confiserie

(30) Priority: 27.06.1988 GB 8815222
(43) Date of publication of application: 17.01.1990
(73) Proprietor: UNILEVER N.V., 3013 AL Rotterdam (NL); UNILEVER PLC, London EC4P 4BQ (GB)
(72) Inventor: Castenmiller, Wilhelmus Adrianus Maria, NL-3131 CH Vlaardingen (NL); Lanting-Marijs, Jacqueline Adrienne, NL-3141 RD Maassluis (NL)
(74) Representative: Mulder, Cornelis Willem Reinier, Dr.

(56) References cited:
- EP-A- 0 236 288
- EP-A- 0 271 951
- EP-A- 0 271 963
- EP-A- 0 285 187
- EP-A- 0 304 131
- EP-A- 0 319 092
- US-A- 4 005 195

## Description

The present invention relates to hard-fat substitutes suitable for confectionery products and maufacture, and in particular, although not exclusively, chocolate confectionery products and manufacture. The invention further relates to confectionery products comprising such hard-fat substitutes.

Hard fats are especially important in confectionery and bakery products. They have the special property that at room temperature they are hard whereas they melt quickly at body temperature, in particular at mouth temperature. The most important example of such a hard fat is cocoa-butter.

High raw material prices and the corresponding desire in industry to be less dependent on cocoa-butter as an almost sole source of hard fat suitable for the confectionery industry, have led to the development of alternative vegetable fats which can act as partial or full substitutes of particularly cocoa-butter.

A well-known and widely used group of cocoa-butter substitutes are the so-called lauric cocoa-butter replacers (CBRs), which are fully refined fats predominantly produced from palmkernel and/or coconut oil by means of fractionation, hydrogenation and/or interesterfication techniques. Although the physical properties of the lauric CBRs such as hardness, melting profile and flavour release are almost equal to cocoa-butter, their physical properties are completely altered by blending them with other fats, including cocoa-butter. Due to this characteristic the lauric CBRs are normally only used as full hard-fat substitutes, and are not blended with e.g. cocoa-butter in amounts of more than 5 to 10 %, calculated as a percentage of the fat phase. When blended in higher ratios, the resulting products become softer, less heat-resistant, waxy and have a greatly increased risk of fat-bloom, which is the formation of a grey/white surface layer on chocolate upon storage.

Two further less widely used groups of cocoa-butter substitutes can be distinguished: the non-lauric CBRs and the cocoa-butter equivalents (CBEs). Although both groups suffer less from the drawback of poor compatibility with cocoa-butter, they are derived from selected, less available raw materials and their manufacture requires more careful and elaborate processing adversely influencing availability and price.

Particularly, in the western world there is an increased interest in food products having a reduced caloric content. In the area of confectionery products up to now the focus has been on the reduction of carbohydrates, in particular the sugar component, by using artificial or reduced-calorie sweeteners.

In the general area of low-calorie food products it has been suggested to reduce the caloric content of food products, in particular of the traditionally high-fat food products such as salad dressings, margarines, shortenings, and the like, by replacement of the triglyceride fats by non-adsorbable, non-digestible polyol fatty acid polyesters. Low-calorie food products comprising polyol fatty acid polyesters are disclosed in US 3,600,186.

Polyol fatty acid esters and polyesters have also been suggested for inclusion in confctionery compositions.

In JP 62/205738 minor amounts of sucrose palmitate (0.5-3 % by weight of the fat phase) are suggested as crystal growth inhibitors in shortenings and chocolate compositions.

In US 2,886,438 chocolate mixes and shortenings comprising upto 5 % by weight of the fat of a fatty acid ester of an unsubstituted monoalkyl-glucoside, such as ethylglucoside stearate are disclosed. The glucoside esters are stated to have benificial effects upon consistency and appearance.

In EP 0 236 288 the suitability in food products of polyol fatty acid polyesters having a specific viscosity and stability profile, is described. Among the many types of food applications also chocolates and chocolate confections are mentioned.

In EP 0 271 951 cocoa-butter substitutes made from sucrose polyesters are described. The sucrose polyester is derived from either a combination of lauric and palmitic fatty acids, or, in the alternative, a combination of capric and stearic fatty acids. Such sucrose polyesters are characterised by a relatively high-melting profile, in particular at mouth temperature, and corresponding thereto, in themselves provide poor oral response. They have to be blended with significant amounts of further fat components to achieve an acceptable chocolate-like melting behaviour at mouth temperature.

EP 285,187 (non-prepublished) relates to chocolate confectionary products containing sucrose polyesters.

EP 319,092 (non-prepublished) discloses a method for the purification of polyol fatty acid polyesters.

EP 304,131 (non-prepublished) discloses sucrose polyesters, although no reference is made to confectionary products.

It has now been found that only a specific and relatively narrow selection of polyol fatty acid polyesters provide good hard-fat replacers suitable for confectionery products such as chocolate, at substantially full replacement levels. It has also been found that the hard-fat replacers based upon the present selection of polyol fatty acid polyesters do not suffer from fat blooming on storage and tolerate increased processing flexibility in the chocolate manufacture, in particular as regards tempering, which conventionally often requires strict control both for cocoa-butter itself as for conventional substitutes thereof.

Accordingly, it is an object of the present invention to provide a hard-fat substitute suitable for substantially full replacement of the conventional fat components in confectionery products having a reduced caloric content.

It is still a further object of the invention to provide a hard-fat substitute suitable for confectionery manufacture which products do not suffer from fat blooming upon storage, and allows increased processing flexibility, in particular with respect to tempering.

In a first aspect the invention concerns the use of a blend of one or more indigestible polyol fatty acid polyesters as hard-fat substitute suitable for confectionery products and manufacture, said polyesters having a degree of conversion of over 70% and a composition of fatty acid residues derived from a blend of fully hardened palm oil and a fully hardened oil belonging to the lauric acid group in a weight ratio of between 50:50 to 15:85, and having an N-line characterized by an N₂₀ within the range of 50 to 100 and an N₃₇ within the range of 0 to 5 determined by NMR using the temperature profile, 30 minutes at 80°C, 5 minutes at 60°C, 16 hours at 0°C and finally 30 minutes at the temperature of measurement.

In another aspect the invention concerns a confectionery product which comprises from 20 to 55% of fat, said fat comprising from 75 to 100%, calculated by weight of total fat in the product, of a blend of one or more indigestible polyol fatty acid polyesters having a degree of conversion of over 70% and a composition of fatty acid residues derived from a blend of fully hardened palm oil and a fully hardened oil belonging to the lauric acid group in a weight ratio of between 50:50 to 15:85 and having an N-line characterized by an N₂₀ within the range of 50 to 100 and an N₃₇ within the range of 0 to 5 determined by NMR using the temperature profile, 30 minutes at 80°C, 5 minutes at 60°C, 16 hours at 0°C and finally 30 minutes at the temperature of measurement.

In a further aspect the present invention provides a confectionery product, in particular a chocolate product, wherein the fat comprises of from 75 to 100 %, calculated by weight of total fat in the product, of an indigestible polyol fatty acid polyester having a composition of fatty acid residues derived from substantially fully hardened vegetable oils, and having an N-line characterised by an N₂₀ within the range of 50 to 100 and an N₃₇ within the rang of 0 to 5.

In this specification the term 'confectionery product' is intended to refer to chocolate products, as well as chocolate-like products, the latter not necessarily including any non-fat cocoa flavouring. The term 'chocolate product' is intended to cover all solid, edible fatty products based on cocoa, i.e. cocoa-powder or cocoa-liquor, whether or not partially comprising cocoa-butter.

The indigestible polyol fatty acid polyesters employed in the present invention are fatty acid polyesters derived from any aliphatic or aromatic compound which comprises at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of the preferred sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alphamethylglucoside. The sucrose polyol being preferred most.

The degree of conversion to polyester, which is defined as the percentage of polyol hydroxyl groups that, on an average, have been esterified with fatty acids, should be over 70 %, and preferably is over 85 or even 95 %.

For the purposes of the present invention by indigestibility, which is closely connected to the degree of esterification and the chain lengths of the fatty acid residues, is meant that at least about 70 % by weight of the material concerned is not digested.

The fatty acid residues are generally derived from C₈-C₂₂ fatty acids, which in view of the required melting characteristics will be predominantly saturated. In general naturally occurring fats and oils may be used as source for the fatty acid residues in the polyol fatty acid polyesters. Conventional techniques may be used to introduce, if necessary, the required degree of saturation. Suitable such techniques include full or partial hydrogenation, interesterification and fractionation, and may be used before or after conversion of the polyols to the corresponding polyol fatty acid polyesters.

The selection of the appropriate composition of fatty acid residues is in particular determined by the required melting characteristics of the resulting polyol fatty acid polyester. A convenient way to define the melting characteristics of a fat or a fat-like substance is by its N-line. The N-line is the graph of Nₜ-values versus the temperature t. The Nₜ-value is conveniently measured by the nuclear magnetic relaxation technique and is a direct measure of the level of solid fat content at temperature t. This method is suitably described in Fette, Seifen, Anstrichmittel 80(5), 180-186 (1978). To some extent the measurement of Nₜ-values is dependent on the temperature profile used to prepare the samples for the NMR-measurement. For the purposes of the present invention the following preparatory temperature profile was used: 30 minutes at 80°C, 5 minutes at 60°C, 16 hours at 0°C and finally 30 minutes at the temperature of the measurement, after which the NMR measurement was carried out.

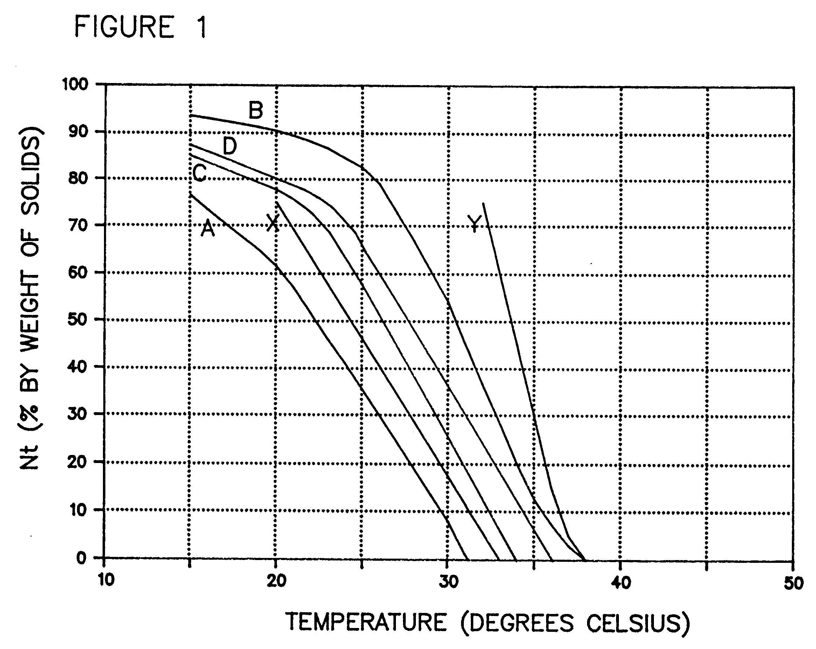

The blend of polyol fatty acid polyesters which can suitably be used in the present invention has an N-line characterised by an N₂₀ within the range of 50 to 100, particularly within the range of 60 to 100, and an N₃₇ within the range of 0 to 5. A preferred blend of polyol fatty acid polyesters has an N-line characterised by an N₂₀ within the range of 70 to 100, an N₃₀ within the range of 35 to 100 and an N₃₇ within the range of 0 to 3. Even more preferred are blends of polyol fatty acid polyesters having an N-line within the area between X and Y in Figure 1.

The melting characteristics are in particular influenced by the composition of fatty acid residues in the ester molecule, and to a lesser extent by the polyol residue. The fatty acid residues are derived from substantially fully hardened vegetable oils, such as in particular fully hardened palm oil and fully hardened lauric oils, such as palm kernel and coconut oils, and mixtures thereof. Preferably, the fatty acid residues are derived from a blend of fully hardened lauric oil and palm oil in a weight ratio of between 50:50 to 85:15, in particular between 50:50 to 75:25.

Accordingly, the present invention further provides a hard-fat substitute suitable for confectionery products and manufacture which comprises a blend of one or more indigestible polyol fatty acid polyesters having a composition of fatty acid residues derived from a blend of substantially fully hardened lauric oil and palm oil in a weight ratio of between 50:50 to 85:15.

Instead of a 'single' polyol fatty acid polyester, i.e. a polyester which is synthesized from a polyol and a source for the fatty acid residues in a single reaction, also a mixture or blend of polyol fatty acid polyesters may be used, i.e. a blend of 'single' polyol fatty acid polyesters, provided the final N-line is characterised as described hereinbefore.

The hard-fat substitute of the present invention in general essentially consist of the blend of one or more indigestible polyol fatty acid polyesters. To a limited extent it may also be a mixture of polyester and e.g. cocoa-butter or further conventional cocoa-butter substitutes, provided such mixture does not substantially change the solids versus temperature profile of the polyester. The amount of polyesters should be within the range of 75 to 100 % by weight of the hard-fat substitute. Preferably, the hard-fat substitute substantially completely consists of the blend of one or more polyol fatty acid polyesters.

The hard-fat substitute in accordance with the invention is particularly suitable for confectionery and in particular, chocolate products.

In general chocolate confectionery products comprise of from 20 to 55 % of fat, and preferably comprise from 30 to 40 % of a fat.

As indicated hereinbefore the fat of the confectionery products essentially fully consists of the blend of one or more indigestible polyol fatty acid polyesters in accordance with the invention. However, it will be realized that this should be understood so as to allow inclusion of minor amounts of further fats, such as cocoa-butter resulting from the use of cocoa flavouring, and milk fats resulting from the use of milk solids. Inclusion of said minor amounts may be allowed provided the solids temperature profile of the polyol fatty acid polyester blend remains substantially unchanged.

In the confectionery products in accordance with the invention the amount of indigestible polyol fatty acid polyester blend should constitute of from 75 to 100 %, calculated by weight of total fat in the product, and preferably constitutes 90 to 100 % of the total fat in the confectionery product.

In addition to the fat component the chocolate confectionery products further comprise one or more conventional chocolate ingredients such as sugar, water, suitable flavouring, in particular cocoa powder, chocolate liquor or cocoa mass, nut or fruit flavourings, alcohol-based confection materials, milk solids in the form of skimmed or full milk powder, emulsifier, such as in particular lecithin, antioxidants, dietary fibers, and vitamins, such as vitamin E.

Preferably, defatted sources of cocoa flavouring are used in amounts of 5 to 30 % by weight of the product, as also de-fatted sources of milk solids, such as in particular skimmed milk powder in amounts of 5 to 25 % by weight of the product.

Suitable sugars include the common sugars, such as sucrose and raffinose, included in amounts of from 10 to 60 %, in particular of from 30 to 50 % by weight of the chocolate composition. These conventional sugars may also be replaced by dietetic sweeteners such as sorbitol, fructose, xylitol and lactitol which provide aerated chocolate compositions particularly suitable to avoid tooth decay or in diabetic diets. Such dietetic sweeteners are included in similar amounts as conventional sugars, i.e. in amounts of 30 to 55 % by weight of the final confectionery filling composition. Inclusion of sorbitol and xylitol have the further advantage to increase the cool-melting sensation of the compositions.

For the purpose of increased cool-melting sensation also effective amounts of in particular dextrose can be included. Suitable amounts range from 5 to 30 % by weight of the final product.

It may be of particular advantage to use a low-calorie high-intensity sweetener in combination with the polyol fatty acid polyesters to provide aerated chocolate compositions having an even further reduced caloric content. Suitable such high-intensity sweeteners include aspartame (phenylalanin), saccharin, cyclamate, sucralose, acesulfame-K, thaumatin and mixtures thereof. They are normally included in amounts of from 0.1 to 5 % by weight of the product. If so desired, the high-intensity sweeteners may also be used to top up reduced amounts of the common sugars or dietetic sweeteners. High-intensity sweeteners are generally supplemented to the amount of sweeteners they replace, by suitable low-calorie bulking agents, such as polydextrose.

Manufacture of the confectionery products in accordance with the present invention follows the conventional processing techniques in chocolate manufacture including mixing, milling, conching, and moulding. The improved crystallisation behaviour of the present hard-fat substitutes render control of tempering conditions superfluous.

The invention will now be further illustrated by way of example.

### EXAMPLE 1

First a sucrose fatty acid polyester was prepared using a process of synthesis as described in the co-pending patent application GB 8728960 (corresponding to the European patent publication no. 0 320 043), and refined using the method as described in the co-pending patent application GB 8729563 (corresponding to the European patent publication no. 0 319 091). The fatty acid methylester was derived from fully hardened palm oil and fully hardened palmkernel oil in a weight ratio of 30:70. The resulting sucrose fatty acid polyester (degree of conversion over 95 %) was characterised by an N-line as shown in Figure 1 as A.

Using this sucrose fatty acid polyester as hard-fat substitute and following conventional chocolate manufacturing techniques apart from tempering, milk chocolate of the following composition was manufactured, percentages being by weight of the full composition:

| | |
|---|---|
| cocoa powder (including 10 % of cocoa-butter) | 5.0 % |
| skimmilk powder | 17.5 % |
| saccharose | 45.6 % |
| hard-fat substitute | 31.5 % |
| vanillin | 0.01 % |
| lecithin | 0.4 % |

No tempering was necessary. Using the above formulation products were manufactured using cooling temperatures of from -20 to +20°C without specific tempering profiles. The resulting products were of excellent consistency and glossy appearance, and showed no signs of blooming upon storage.

### EXAMPLE 2

The procedure of example 1 was used to synthesize a hard-fat substitute consisting of a sucrose fatty acid polyester in which the fatty acid residues were derived from an oil blend comprising 47 wt.% of fully hardened palm oil and 53 wt.% of fully hardened palmkernel oil. The resulting sucrose fatty acid polyester (degree of conversion over 95 %) was characterised by an N-line as shown in Figure 1 as B. The sucrose polyester had the following fatty acid residue distribution in mol-%: lauric - 42 %, myristic - 14 %, palmitic - 16 %, stearic - 24 % and others - 4 %.

Using this hard-fat substitute a milk chocolate was prepared according to the procedure of example 1 using the following formulation:

| | |
|---|---|
| cocoa powder (including 10 % of cocoa-butter) | 7.0 % |
| skimmilk powder | 17.5 % |
| saccharose | 43.6 % |
| hard-fat substitute | 31.5 % |
| vanillin | 0.01 % |
| lecithin | 0.4 % |

Results were obtained similar to example 1, no tempering being necessary.

### EXAMPLE 3

The procedure of example 1 was used to synthesize two hard-fat substitutes both consisting of sucrose fatty acid polyester batch in which the fatty acid residues were derived from an oil blend comprising 62 % of fully hardened palm kernel oil and 38 % of fully hardened palm oil. The sucrose fatty acid polyester batches (degree of conversion over 95 %) were characterised by N-lines as shown in Figure 1 as C and D. The sucrose polyesters had the following fatty acid residue distributions (percentages by weight):

| fatty acid residue | batch C | batch D |
|---|---|---|
| caprilic | 4 % | 2 % |
| lauric | 49 % | 41 % |
| myristic | 12 % | 12 % |
| palmitic | 15 % | 21 % |
| stearic | 12 % | 16 % |
| others | 8 % | 7 % |

Using these hard-fat substitutes a milk chocolate was prepared according to the procedure of example 1 using the following formulation:

| | |
|---|---|
| cocoa powder (including 10 % of cocoa-butter) | 16.0 % |
| skimmilk powder | 10.0 % |
| saccharose | 39.0 % |
| hard-fat substitute | 34.6 % |
| vanillin | 0.01 % |
| lecithin | 0.4 % |

After milling for 6 hours at 50 to 60°C the chocolate products were moulded and solidified at about 10°C in a cooling tunnel for 20 minutes. The resulting products were of excellent consistency and glossy appearance, and showed no signs of blooming upon storage.

## Claims

1. Use of blend of one or more indigestible polyol fatty acid polyesters as hard-fat substitute suitable for confectionery products and manufacture, said polyesters having a degree of conversion of over 70% and a composition of fatty acid residues derived from a blend of fully hardened palm oil and a fully hardened oil belonging to the lauric acid group in a weight ratio of between 50:50 to 15:85, and having an N-line characterized by an N₂₀ within the range of 50 to 100 and an N₃₇ within the range of 0 to 5 determined by NMR using the temperature profile, 30 minutes at 80°C, 5 minutes at 60°C, 16 hours at 0°C and finally 30 minutes at the temperature of measurement.

2. Use according to claim 1 in which the blend of one or more polyol fatty acid polyesters has an N-line characterized by an N₂₀ within the range of 70 to 100, an N₃₀ within the range of 35 to 100 and an N₃₇ within the range of 0 to 3.

3. Use according to claim 1 in which the blend of one or more polyol fatty acid polyesters has an N-line within the area between X and Y in figure 1.

4. Use according to any of the preceding claims in which the polyol fatty acid polyesters are sucrose fatty acid polyesters.

5. A confectionery product which comprises from 20 to 55% of fat, said fat comprising from 75 to 100%, calculated by weight of total fat in the product, of a blend of one or more indigestible polyol fatty acid polyesters having a degree of conversion of over 70% and a composition of fatty acid residues derived from a blend of fully hardened palm oil and a fully hardened oil belonging to the lauric acid group in a weight ratio of between 50:50 to 15:85 and having an N-line characterized by an N₂₀ within the range of 50 to 100 and an N₃₇ within the range of 0 to 5 determined by NMR using the temperature profile, 30 minutes at 80°C, 5 minutes at 60°C, 16 hours at 0°C and finally 30 minutes at the temperature of measurement.

6. A confectionery product according to claim 5 in which the blend of one or more polyol fatty acid polyesters has an N-line characterised by an N₂₀ within the range of 70 to 100, an N₃₀ within the range of 35 to 100 and an N₃₇ within the range of 0 to 3.

7. A confectionery product according to claim 5 in which the blend of one or more polyol fatty acid polyesters has an N-line within the area between X and Y in figure 1.

8. A confectionery product according to any one of the preceding claims 5 to 7 in which the polyol fatty acid polyesters are sucrose fatty acid polyesters.

## Patentansprüche

1. Verwendung eines Gemisches von einem oder mehreren unverdaulichen Polyolfettsäurepolyestern als für Süßwarenprodukte und ihre Herstellung geeigneter Hartfettersatz, wobei die Polyester einem Umwandlungsgrad von mehr als 70 % und eine Zusammensetzung von Fettsäureresten haben, die von einem Gemisch von völlig gehärtetem Palmöl und einem völlig gehärteten Öl, das zur Laurinsäuregruppe gehört, in einem Gewichtsverhältnis zwischen 50:50 und 15:85 abgeleitet sind und eine N-Linie, gekennzeichnet durch einen N₂₀-Wert im Bereich von 50 bis 100 und einen N₃₇-Wert im Bereich von 0 bis 5, bestimmt durch NMR unter Verwendung des Temperaturprofils: 30 min bei 80°C, 5 min bei 60°C, 16 h bei 0°C und schließlich 30 min bei der Meßtemperatur, haben.

2. Verwendung nach Anspruch 1, in welcher das Gemisch von einem oder mehreren Polyolfettsäurepolyestern eine N-Linie hat, die durch einen N₂₀-Wert im Bereich von 70 bis 100, einen N₃₀-Wert im Bereich von 35 bis 100 und einen N₃₇-Wert im Bereich von 0 bis 3 gekennzeichnet ist.

3. Verwendung nach Anspruch 1, in welcher das Gemisch von einem oder mehreren Polyolfettsäurepolyestern eine N-Linie innerhalb der Fläche zwischen X und Y in Fig. 1 hat.

4. Verwendung nach irgendeinem der vorhergehenden Ansprüche, in welcher die Polyolfettsäurepolyester Saccharosefettsäurepolyester sind.

5. Süßwarenprodukt, das 20 bis 55 % Fett umfaßt, wobei dieses Fett 75 bis 100 %, berechnet auf das Gewicht des gesamten Fettes im Produkt, eines Gemisches von einem oder mehreren unverdaulichen Polyolfettsäurepolyestern mit einem Unwandlungsgrad über 70 % und einer Zusammensetzung von Fettsäureresten umfaßt, die von einem Gemisch von völlig gehärtetem Palmöl und einem völlig geharteten Öl, das zur Laurinsäuregruppe gehört, in einem Gewichtsverhältnis zwischen 50:50 und 15:85 abgeleitet sind und eine N-Linie, gekennzeichnet durch einen N₂₀-Wert im Bereich von 50 bis 100 und einen N₃₇-Wert im Bereich von 0 bis 5, bestimmt durch NMR unter Anwendung des Temperaturprofils: 30 min bei 80°C, 5 min bei 60°C, 16 h bei 0°C und schließlich 30 min bei der Meßtemperatur, haben.

6. Süßwarenprodukt nach Anspruch 5, in welchem das Gemisch von einem oder mehreren Polyolfettsäurepolyestern eine N-Linie hat, die durch einen N₂₀-Wert im Bereich von 70 bis 100, einen N₃₀-Wert im Bereich von 35 bis 100 und einen N₃₇-Wert im Bereich von 0 bis 3 gekennzeichnet ist.

7. Süßwarenprodukt nach Anspruch 5, in welchem das Gemisch von einem oder mehreren Polyolfettsäurepolyestern eine N-Linie innerhalb der Flache zwischen X und Y in Fig. 1 hat.

8. Süßwarenprodukt nach irgendeinem der vorhergehenden Ansprüche 5 bis 7, in welchem die Polyolfettsäurepolyester Saccharosefettsäurepolyester sind.

## Revendications

1. Utilisation d'un mélange d'un ou plusieurs polyesters de polyols et d'acides gras indigestes, à titre de succédané de graisses dures, convenable pour la fabrication et les produits de confiserie, lesdits polyesters ayant un degré de conversion supérieur à 70 % et une composition de résidus d'acides gras provenant d'un mélange d'huile de palme totalement durcie et d'une huile totalement durcie appartenant au groupe de l'acide laurique dans un rapport pondéral compris entre 50 : 50 et 15 : 85, et ayant une ligne des N caractérisée par un N₂₀ compris dans l'intervalle de 50 à 100 et un N₃₇ compris dans l'intervalle de 0 à 5, déterminés par RMN en utilisant le profil de températures, 30 minutes à 80°C, 5 minutes à 60°C, 16 heures à 0°C et enfin 30 minutes à la température de la mesure.

2. Utilisation selon la revendication 1, dans laquelle le mélange d'un ou plusieurs polyesters de polyols et d'acides gras possède une ligne des N caractérisée par un N₂₀ compris dans l'intervalle de 70 à 100, un N₃₀ compris dans l'intervalle de 35 à 100 et un N₃₇ compris dans l'intervalle de 0 à 3.

3. Utilisation selon la revendication 1, dans laquelle le mélange d'un ou plusieurs polyesters de polyols et d'acides gras possède une ligne des N comprise dans l'aire comprise entre X et Y sur la figure 1.

4. Utilisation selon l'une quelconque des revendications précédentes, dans laquelle les polyesters de polyols et d'acides gras sont des polyesters de sucrose et d'acides gras.

5. Produit de confiserie qui comprend de 20 à 55 % de graisse, ladite graisse comprenant de 75 à 100 %, calculé en poids de la graisse totale dans le produit, d'un mélange d'un ou plusieurs polyesters de polyols et d'acides gras indigestes ayant un degré de conversion supérieur à 70 % et une composition de résidus d'acides gras provenant d'un mélange d'huile de palme totalement durcie et d'une huile totalement durcie appartenant au groupe de l'acide laurique dans un rapport pondéral compris entre 50 : 50 et 15 : 85 et ayant une ligne des N caractérisée par un N₂₀ compris dans l'intervalle de 50 à 100 et un N₃₇ compris dans l'intervalle de 0 à 5, déterminés par RMN à l'aide du profil de températures, 30 minutes à 80°C, 5 minutes à 60°C, 16 heures à 0°C et enfin 30 minutes à la température de la mesure.

6. Produit de confiserie selon la revendication 5, dans lequel le mélange d'un ou plusieurs polyesters de polyols et d'acides gras possède une ligne des N caractérisée par un N₂₀ compris dans l'intervalle de 70 à 100, un N₃₀ compris dans l'intervalle de 35 à 100 et un N₃₇ compris dans l'intervalle de 0 à 3.

7. Produit de confiserie selon la revendication 5, dans lequel le mélange d'un ou plusieurs polyesters de polyols et d'acides gras possède une ligne des N comprise dans l'aire comprise entre X et Y sur la figure 1.

8. Produit de confiserie selon l'une quelconque des revendications précédentes 5 à 7, dans lequel les polyesters de polyols et d'acides gras sont des polyesters de sucrose et d'acides gras.
